# EUROPEAN PATENT APPLICATION

(11) **EP 4 579 823 A1**
(43) Date of publication of application: **02.07.2025**
(21) Application number: 22956077.6
(22) Date of filing: 25.08.2022
(51) Int. Cl.: H01M 4/78

(54) **BATTERY CELL, BATTERY AND ELECTRIC DEVICE**

(71) Applicant: Contemporary Amperex Technology Co., Limited, Fujian 352100 (CN)
(72) Inventor: KE, Haibo, Ningde City, Fujian 352100 (CN); LI, Quankun, Ningde City, Fujian 352100 (CN); WANG, Peng, Ningde City, Fujian 352100 (CN); HUANG, Shoujun, Ningde City, Fujian 352100 (CN); MAO, Guoan, Ningde City, Fujian 352100 (CN); CAO, Junqi, Ningde City, Fujian 352100 (CN)
(74) Representative: Ran, Handong
(86) International application number: PCT/CN2022/114890
(87) International publication number: WO 2024/040530

(57) **Abstract**

The present application relates to the field of batteries, and provides a battery cell, a battery and an electric device. The battery cell comprises an electrode assembly, a casing and an insulator. The casing is used for accommodating the electrode assembly, and has a wall portion arranged opposite the electrode assembly in a first direction, the wall portion being provided with a first pressure-relief area. In the first direction, the insulator is at least partially arranged between the electrode assembly and the wall portion to insulate the electrode assembly from the wall portion. The insulator is provided with a second pressure-relief area corresponding to the first pressure-relief area, and the first pressure-relief area and the second pressure-relief area are configured to be open when the battery cell releases pressure. When the battery cell is in normal use, the second pressure-relief area separates the electrode assembly from the first pressure-relief area, and an electrolyte in the casing is less prone to scouring the first pressure-relief area and thereby influencing the explosion-initiating pressure of the first pressure-relief area. When the battery cell releases pressure, the second pressure-relief area is open to allow gas to pass through the insulator to release pressure via the first pressure-relief area, which has relatively high safety.

## Description

### TECHNICAL FIELD

The present application relates to the field of batteries, and specifically relates to a battery cell, a battery and an electrical device.

### BACKGROUND

Batteries are widely used in the field of new energy, such as electric vehicles, and new energy vehicles, and the new energy vehicles and electric vehicles have become a new development trend in the automobile industry. Many design factors need to be taken into account in the development of battery technology at the same time, such as battery life, energy density, discharge capacity, charge-discharge rate and other performance parameters. In addition, the safety of the batteries also needs to be considered. However, current batteries have poor safety.

### SUMMARY OF THE INVENTION

Objectives of the embodiments of the present application are to provide a battery cell, a battery and an electrical device, so as to solve the problem of poor safety of the battery in the related art.

In a first aspect, an embodiment of the present application provides a battery cell. The battery cell includes an electrode assembly, a case and an insulating member; the case is used for accommodating the electrode assembly and has a wall portion arranged opposite the electrode assembly in a first direction; the wall portion is provided with a first pressure-relief area; in the first direction, the insulating member is at least partially arranged between the electrode assembly and the wall portion to insulate and isolate the electrode assembly from the wall portion; and the insulating member is provided with a second pressure-relief area at the position corresponding to the first pressure-relief area, and the first pressure-relief area and the second pressure-relief area are configured to be open when the battery cell releases pressure.

In the above technical solution, the insulating member is arranged between the electrode assembly of the battery cell and the wall portion provided with the first pressure-relief area, and the insulating member is provided with the second pressure-relief area corresponding to the first pressure-relief area. When the battery cell is in normal use, the second pressure-relief area separates the electrode assembly from the first pressure-relief area, and even the battery cell is subjected to vibration, the electrolyte in the case is less prone to scouring the first pressure-relief area and thereby influencing the explosion-initiating pressure of the first pressure-relief area. When the battery cell releases pressure, the second pressure-relief area is open to allow gas to pass through the insulating member to release pressure via the first pressure-relief area, which has relatively high safety.

As an optional technical solution in the embodiment of the present application, the insulating member is provided with a score, and the score is arranged along the edge of the second pressure-relief area.

In the above technical solution, as the score is arranged on the insulating member to form a weak position, the second pressure-relief area can be conveniently open from the weak position when the battery cell releases pressure. As the score is arranged along the edge of the second pressure-relief area, the second pressure-relief area will be open along the edge when the battery cell releases pressure, so as to provide a larger opening for gas to pass through.

As an optional technical solution of the embodiment of the present application, the score is arranged around the outer side of the projection of the first pressure-relief area on the insulating member in the first direction.

In the above technical solution, as the score is arranged along the edge of the second pressure-relief area and is arranged around the outer side of the projection of the first pressure-relief area on the insulating member in the first direction, the range of the second pressure-relief area is larger than that of the first pressure-relief area. That is, in the first direction, the projection of the second pressure-relief area on the wall portion covers the first pressure-relief area. Therefore, when the battery cell releases pressure, the area of the opening formed by the opened second pressure-relief area is larger than that of the first pressure-relief area, so as to facilitate smooth pressure releasing.

As an optional technical solution of the embodiment of the present application, a first pressure-relief groove is formed in the wall portion, the first pressure-relief groove is arranged along the edge of the first pressure-relief area, and the score is arranged around the outer side of the projection of the first pressure-relief groove on the insulating member in the first direction.

In the above technical solution, as the first pressure-relief groove is formed in the wall portion to form a weak position, the first pressure-relief area can be conveniently open from the weak position when the battery cell releases pressure. As the first pressure-relief groove is arranged along the edge of the first pressure-relief area, the first pressure-relief area will be open along the edge when the battery cell releases pressure, so as to provide a larger opening for gas to pass through.

As an optional technical solution of the embodiment of the present application, the battery cell includes a pressure-relief member, and a pressure-relief hole is formed in the wall portion; the pressure-relief member covers the pressure-relief hole; a second pressure-relief groove is formed in the pressure-relief member, and the second pressure-relief groove is arranged along the edge of the first pressure-relief area; and the score is arranged around the outer side of the projection of the second pressure-relief groove on the insulating member in the first direction.

In the above technical solution, as the second pressure-relief groove is formed in the pressure-relief member to form a weak position, the first pressure-relief area can be conveniently open from the weak position when the battery cell releases pressure. As the second pressure-relief groove is arranged along the edge of the first pressure-relief area, the first pressure-relief area will be open along the edge when the battery cell releases pressure, so as to provide a large opening for gas to pass through.

As an optional technical solution of the embodiment of the present application, the score is arranged around the outer side of the projection of the pressure-relief hole on the insulating member in the first direction.

In the above technical solution, as the score is arranged around the outer side of the projection of the pressure-relief hole on the insulating member in the first direction, if the score penetrates through the insulating member, the electrolyte will not directly flow to the pressure-relief member after passing through the score when the battery cell is in normal use, but collides with the wall portion first and changes the flowing direction, then flows to the pressure-relief member after the impact force is reduced, and thus the pressure-relief member is not prone to be scoured by the electrolyte. In addition, when the battery cell releases pressure, the opening area of the second pressure-relief area is greater than the area of the pressure-relief hole, which facilitates smooth pressure releasing.

As an optional technical solution in the embodiment of the present application, the score includes a plurality of score sections which are arranged at intervals in the circumferential direction of the second pressure-relief area.

In the above technical solution, as the plurality of score sections are arranged, when the battery cell releases pressure, the second pressure-relief area can be open from the score sections to allow gas to pass through the insulating member to release pressure via the first pressure-relief area. The plurality of score sections are arranged at intervals in the circumferential direction of the second pressure-relief area, instead of forming a whole circle of score in the circumferential direction of the second pressure-relief area, so the strength of the second pressure-relief area is high, and even if the battery cell is subjected to large vibration, the second pressure-relief area cannot be open by mistake.

As an optional technical solution in the embodiment of the present application, the score sections penetrate through two opposite surfaces of the insulating member in the first direction.

In the above technical solution, as the score sections penetrate through the two surfaces of the insulating member in the first direction, the second pressure-relief area is more prone to be open when the battery cell releases pressure. In addition, although the score sections penetrate through the two surfaces of the insulating member in the first direction, the score is arranged around the outer side of the first pressure-relief area, so the electrolyte passing through the insulating member cannot directly scour the first pressure-relief area, but may pass through the insulating member and change the direction to flow to the first pressure-relief area, and therefore, the impact force of the electrolyte is not strong to influence the explosion-initiating pressure of the first pressure-relief area.

As an optional technical solution in the embodiment of the present application, the width of the score sections is D1, which meets: D1≤2mm.

In the above technical solution, the width of the score sections is smaller than 2 mm, the width of a remaining portion between every two adjacent score sections is limited actually, and the smaller the width of the portion is, the easier the second pressure-relief area is prone to be open when the battery cell releases pressure. If D1>2mm, the width of the remaining portion between every two adjacent score sections is larger than 2 mm, consequently, the width of this portion is large, and when the battery cell releases pressure, the second pressure-relief area cannot be open in time, and as a result, the second battery cell cannot release pressure in time.

As an optional technical solution in the embodiment of the present application, the distance D2 between every two adjacent score sections in the circumferential direction of the second pressure-relief area meets: D2≤10mm.

In the above technical solution, the distance between every two adjacent score sections is also the length of the remaining portion between the two adjacent score sections, and the smaller the length of the portion is, the easier the second pressure-relief area is open when the battery cell releases pressure. If D2>10mm, the length of the remaining portion between every two adjacent score sections is also larger than 10 mm, consequently, the length of this portion is large, and when the battery cell releases pressure, the second pressure-relief area cannot be open in time, and as a result, the second battery cell cannot release pressure in time.

As an optional technical solution in the embodiment of the present application, in a direction perpendicular to the first direction, the spacing between the score and the first pressure-relief area is D3, which meets: D3≤3mm.

In the above technical solution, by limiting the spacing between the score and the first pressure-relief area in the direction perpendicular to the first direction, an area relationship between the second pressure-relief area and the first pressure-relief area is actually limited. The area of the second pressure-relief area is larger than that of the first pressure-relief area, but the area of the second pressure-relief area cannot be too large, otherwise, when the second pressure-relief area is open, the second pressure-relief area is insulated from the insulating member, the separated portion may fall to the first pressure-relief area, and therefore the first pressure-relief area is blocked, and the pressure releasing of the first pressure-relief area is affected.

As an optional technical solution in the embodiment of the present application, the score is of a closed structure extending along a closed track.

In the above technical solution, the score is a whole circle of score arranged along the edge of the second pressure-relief area, and thus the second pressure-relief area is easily open when the battery cell releases pressure.

As an optional technical solution in the embodiment of the present application, the score includes a plurality of groove sections and a plurality of hole sections, and the groove sections and the hole sections are alternately arranged in the circumferential direction of the second pressure-relief area; and in the first direction, the insulating member is provided with a first surface and a second surface which are opposite, the groove sections are sunken from the first surface to the second surface, and the hole sections penetrate through the first surface and the second surface.

In the above technical solution, the groove sections and the hole sections are different in score depth. The hole sections penetrate through the first surface and the second surface, so the score depth is large. The groove sections are sunken from the first surface to the second surface, so the score depth is small. The plurality of groove sections and the plurality of hole sections are arranged at intervals in the circumferential direction of the second pressure-relief area, so that the second pressure-relief area is prone to be open when the battery cell releases pressure.

As an optional technical solution in the embodiment of the present application, in the first direction, the insulating member is provided with a first surface facing the wall portion, and the score is formed in the first surface.

In the above technical solution, the score is formed in the surface of the insulating member facing the wall portion, so the electrolyte is not prone to be gathered in the score, and sufficient electrolyte in the battery cell can be guaranteed.

As an optional technical solution in the embodiment of the present application, the insulating member is of a flat plate structure.

In the above technical solution, the insulating member is arranged to be of the flat plate structure, on one hand, the size occupied in the battery cell is small. On the other hand, the flat plate structure may have a good supporting effect on the electrode assembly, and the electrode assembly is not prone to be damaged.

In a second aspect, the embodiment of the present application provides a battery, the battery includes a box and the above battery cell, and the battery cell is accommodated in the box.

In a third aspect, the embodiment of the present application provides an electrical device, the electrical device includes the above battery, and the battery is configured to provide electric energy for the electrical device.

### Description of Drawings

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
Fig. 1 is a schematic structural diagram of a vehicle according to some embodiments of the present application;
FIG. 2 is an exploded view of a battery provided in some embodiments of the present application;
FIG. 3 is an exploding view of a battery cell provided by some embodiments of the present application;
FIG. 4 is a front-view schematic diagram of an insulating member provided by some embodiments of the present application;
FIG. 5 is a sectional diagram of a B-B position in FIG. 4;
FIG. 6 is a front-view schematic diagram of an insulating member provided by some other embodiments of the present application;
FIG. 7 is a sectional diagram of a C-C position in FIG. 6;
FIG. 8 is a front-view schematic diagram of an insulating member provided by some other embodiments of the present application;
FIG. 9 is a sectional diagram of a D-D position in FIG. 8;
FIG. 10 is a sectional diagram of an insulating member provided by some yet other embodiments of the present application; and
FIG. 11 is a sectional diagram of an E-E position in FIG. 10.

Reference numerals: 10-box; 11-first part; 12-second part; 20-battery cell; 21-electrode assembly; 22-case; 221-end cover; 222-case body; 2221-wall portion; 2222-first pressure-relief area; 23-insulating member; 231-second pressure-relief area; 232-score; 2321-score section; 2322-groove section; 2323-hole section; 233-first surface; 234-second surface; 235-groove; 100-battery; 200-controller; 300-motor; and 1000-vehicle.

### Detailed Description

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application have the same meanings as generally understood by those skilled in the technical art of the present application; the terms used in the description of the present application are for the purpose of describing specific embodiments only and are not intended to limit the present application; the terms "include" and "have" in the description and claims of the present application and in the description of the above accompanying drawings and any variation thereof are intended to cover the non-exclusive inclusion. The terms "first", "second", etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

The term "a plurality of" in the present application refers to more than two (inclusive).

In the present application, a battery cell may include a secondary lithium-ion battery cell, a primary lithium-ion battery cell, a lithium-sulfur battery cell, a sodium lithium-ion battery cell, a sodium-ion battery cell or a magnesium-ion battery cell, etc., which is not limited in the embodiment of the present application. The battery cell may be in a shape of a cylinder, a flat body, a cuboid or other shapes, which is not limited in the embodiment of the present application. The battery cells are generally classified into three types depending on the way of package: cylindrical battery cells, prismatic battery cells and pouch battery cells, which are also not limited in the embodiments of the present application.

The battery mentioned in the embodiments of the present application refers to a single physical module including one or more battery cells to provide a higher voltage and capacity. For example, the battery mentioned in the present application may include a battery module or a battery pack, etc. The battery generally includes a box for packaging one or more battery cells. The box can prevent liquid or other foreign matters from affecting charging or discharging of the battery cells.

The battery cell includes an electrode assembly and an electrolytic solution, and the electrode assembly is composed of a positive electrode plate, a negative electrode plate and a separator. The operation of the battery cell mainly relies on the movement of metal ions between the positive electrode plate and the negative electrode plate. The positive electrode plate includes a positive electrode current collector and a positive electrode active material layer, a surface of the positive electrode current collector is coated with the positive electrode active material layer, the positive electrode current collector not coated with the positive electrode active material layer protrudes from the positive electrode current collector already coated with the positive electrode active material layer, and the positive electrode current collector not coated with the positive electrode active material layer is used as a positive tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer, a surface of the negative electrode current collector is coated with the negative electrode active material layer, the negative electrode current collector not coated with the negative electrode active material layer protrudes from the negative electrode current collector already coated with the negative electrode active material layer, and the negative electrode current collector not coated with the negative electrode active material layer is used as a negative tab. The negative electrode current collector may be of a material of copper, and the negative electrode active material may be carbon, silicon, etc. In order to ensure that no fusing occurs when a large current passes, there are a plurality of positive tabs which are stacked together, and there are a plurality of negative tabs which are stacked together. The separator may be of a material such as polypropylene (PP) or polyethylene (PE). In addition, the electrode assembly may be of a winding structure or a laminated structure, and the embodiment of the present application is not limited to the above.

Many design factors are needed to be taken into account in the development of battery technology at the same time, such as battery life, energy density, discharge capacity, charge-discharge rate and other performance parameters. In addition, the safety of the batteries also needs to be considered. However, current batteries have poor safety.

For the battery cell, in order to ensure the safety of the battery cell, a pressure-relief mechanism can be arranged on the battery cell. When the internal pressure of the battery cell reaches the explosion-initiating pressure, the pressure-relief mechanism will be open to release the pressure inside the battery cell so as to reduce the risk of explosion and fire of the battery cell.

The inventor noted that the pressure-relief mechanism often cannot implement normal pressure-relief function.

The inventor further found that there is an insulating member between the pressure-relief mechanism and the electrode assembly, which insulates the pressure-relief mechanism from the electrode assembly, and when the internal pressure of the battery cell reaches the explosion-initiating pressure, the insulating member separates the electrode assembly from the pressure-relief mechanism, resulting in poor exhaust, consequently, the pressure-relief mechanism cannot release pressure normally. If the insulating member is directly provided an opening corresponding to the pressure-relief mechanism to allow gas to pass through, the electrolyte in the battery cell easily passes through the opening and scours the pressure-relief mechanism under a vibration condition, thereby affecting the explosion-initiating pressure of the pressure-relief mechanism, resulting in the failure of the pressure-relief mechanism to implement the normal pressure-relief function.

In view of this, an embodiment of the present application provides a battery cell, and the battery cell includes an electrode assembly, a case and an insulating member. The case is used for accommodating the electrode assembly and has a wall portion arranged opposite the electrode assembly in a first direction. The wall portion is provided with a first pressure-relief area. In the first direction, the insulating member is at least partially arranged between the electrode assembly and the wall portion to insulate and isolate the electrode assembly from the wall portion. The insulating member is provided with a second pressure-relief area at the position corresponding to the first pressure-relief area, and the first pressure-relief area and the second pressure-relief area are configured to be open when the battery cell releases pressure.

The insulating member is arranged between the electrode assembly of the battery cell and the wall portion provided with the first pressure-relief area, and the insulating member is provided with the second pressure-relief area corresponding to the first pressure-relief area. When the battery cell is in normal use, the second pressure-relief area separates the electrode assembly from the first pressure-relief area, and even the battery cell is subjected to vibration, the electrolyte in the case is less prone to scouring the first pressure-relief area and thereby influencing the explosion-initiating pressure of the first pressure-relief area. When the battery cell releases pressure, the second pressure-relief area is open to allow gas to pass through the insulating member to release pressure via the first pressure-relief area, which has relatively high safety.

The technical solution in the embodiment of the present application is suitable for the battery and the electrical device using the battery.

The electrical apparatus may be a vehicle, a mobile phone, a portable apparatus, a laptop, a ship, a spacecraft, an electric toy, an electric tool, etc. The spacecraft includes an airplane, a rocket, a space shuttle, or a spaceship. The electric toy includes a fixed or mobile electric toy, such as a game console, an electric vehicle toy, an electric ship toy, and an electric airplane toy. The electric tool includes an electric tool for metal cutting, an electric tool for grinding, an electric tool for assembling and an electric tool for railways, such as an electric drill, an electric grinder, an electric wrench, an electric screwdriver, an electric hammer, an electric impact drill, a concrete vibrator, and an electric planer. The electrical apparatus is not specially limited in the embodiments of the present application.

For the convenience of illustration, the following embodiments are illustrated with the electrical device being a vehicle 1000 as an example.

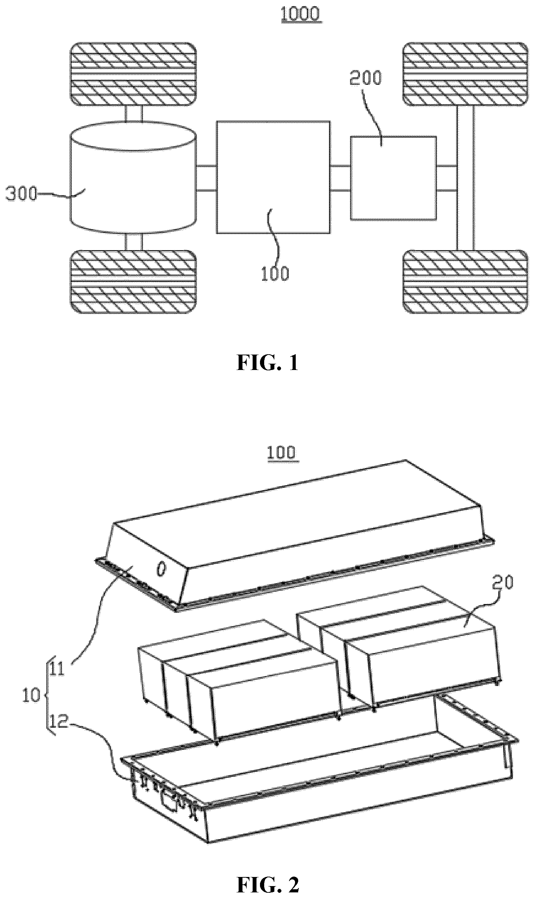

Referring to Fig. 1, Fig. 1 is a schematic structural diagram of a vehicle 1000 according to some embodiments of the present application. The vehicle 1000 may be a fuel vehicle, a gas vehicle or a new energy vehicle. The new energy vehicle may be an all-electric vehicle, a hybrid vehicle, an extended-range vehicle, or the like. A battery 100 is arranged in the vehicle 1000. The battery 100 may be arranged at the bottom or head or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, to supply power for starting, navigation and driving of the vehicle 1000.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

Referring to Fig. 2, Fig. 2 is an exploded view of a battery 100 according to some embodiments of the present application. The battery 100 includes a box 10 and a battery cell 20; and the battery cell 20 is accommodated within the box 10, where the box body 10 is used to provide an accommodation space for the battery cell 20, and the box body 10 can be of various structures. In some embodiments, the box body 10 may comprise a first portion 11 and a second portion 12, the first portion 11 and the second portion 12 covering each other, and the first portion 11 and the second portion 12 together defining the accommodation space for accommodating the battery cell 20. The second portion 12 may be of a hollow structure with an opening at one end, and the first portion 11 may be of a plate-like structure, where the first portion 11 covers the opening side of the second portion 12 so that the first portion 11 and the second portion 12 together define the accommodation space; and the first portion 11 and the second portion 12 may each be of a hollow structure with an opening at one end, where the opening side of the first portion 11 is capped on the opening side of the second portion 12. Of course, the box body 10 formed by the first portion 11 and the second portion 12 may be of a variety of shapes, such as a cylinder, a rectangular solid, or the like.

In the battery 100, there may be a plurality of battery cells 20, and the plurality of battery cells 20 can be connected in series or in parallel or in a mixed connection, where the mixed connection means that the plurality of battery cells 20 are connected in both series and parallel. The plurality of battery cells 20 can be directly connected together in series or in parallel or in mixed connection, and then the whole composed of the plurality of battery cells 20 can be accommodated in the box body 10; and of course, the battery 100 may also be in the form of a battery module first formed by the plurality of battery cells 20 being connected in series or in parallel or in mixed connection, then multiple battery modules can be connected in series or in parallel or in mixed connection to form a whole, and accommodated in the box body 10. The battery 100 may further include other structures. For example, the battery 100 may further include a bus component for electrically connecting the plurality of battery cells 20.

Each battery cell 20 may be a secondary battery cell or a primary battery cell; or may be a lithium-sulfur battery cell, a sodium-ion battery cell or a magnesium-ion battery cell, but is not limited thereto. The battery cell 20 may be in the shape of a cylinder, a flat body, a cuboid or others.

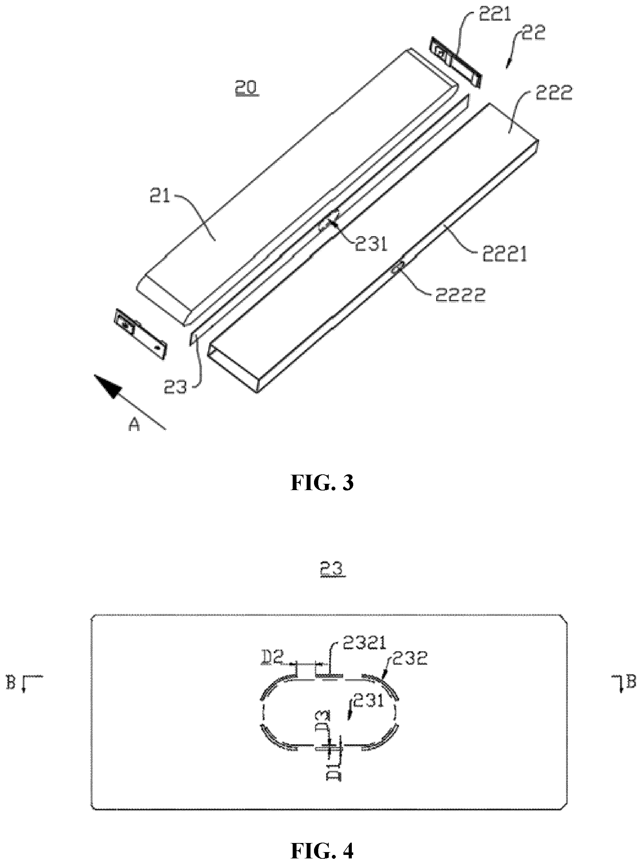

Referring to Fig. 3, Fig. 3 is an exploded view of a battery cell 20 according to some embodiments of the present application. The battery cell 20 refers to a minimum unit forming the battery 100. As shown in FIG. 3, the battery cell 20 includes an electrode assembly 21, a case 22 and other functional components. The case 22 includes an end cover 221 and a case body 222; and the end cover 221 is connected to the case body 222.

The end cover 221 refers to a component which covers an opening of the case body 222 to isolate an internal environment of the battery cell 20 from an external environment. The end cover 221 can be adapted to the case body 222 by shape without limitation so as to be matched with the case body 222. Optionally, the end cover 221 can be made of a material (such as aluminum alloy) with certain hardness and strength, so that the end cover 221 is not easy to deform when being extruded and collided, the battery cell 20 can have higher structural strength, and the safety performance can be improved. The end cover 221 may be provided with functional components such as an electrode terminal. The electrode terminal can be electrically connected to the electrode assembly 21 to output or input electric energy of the battery cell 20. There may be many kinds of materials of the case 221, such as copper, iron, aluminum, stainless steel, aluminum alloy, and plastic, which is not specifically limited in the embodiment of the present application.

The case body 222 is an assembly matched with the end cover 221 to form the internal environment of the battery cell 20, in which, the formed internal environment can be used for accommodating the electrode assembly 21, the electrolyte and other components. The case body 222 and the end cover 221 can be independent components; an opening can be formed in the case body 222; and the end cover 221 covers the opening at the opening position to form the internal environment of the battery cell 20. The end cover 221 and the case body 222 can also be integrated without limitation. Specifically, the end cover 221 and the case body 222 can form a common connection surface before placing other components in the case, and when sealing the inner portion of the case body 222, the end cover 221 covers the case body 222. The case body 222 can be in various shapes and various sizes, such as a cuboid shape, a cylinder shape, and a hexagonal prism shape. Specifically, the shape of the case body 222 can be determined according to the specific shape and the size of the electrode assembly 21. There may be many kinds of materials of the case body 222, such as copper, iron, aluminum, stainless steel, aluminum alloy, and plastic, which is not specifically limited in the embodiment of the present application.

The electrode assembly 21 is a component that can generate an electrochemical reaction in the battery cell 20. The shell 22 may internally include one or more electrode assemblies 21. The electrode assembly 21 is mainly formed by winding or laminating a positive electrode plate and a negative electrode plate, and a diaphragm is usually arranged between the positive electrode plate and the negative electrode plate. The parts, with active materials, of the positive electrode plate and the negative electrode plate form a main body part of the electrode assembly 21; and the parts, without the active materials, of the positive electrode plate and the negative electrode plate respectively form tabs. A positive electrode tab and a negative electrode tab can be jointly located at one end of the main body part or respectively positioned at two ends of the main body part. In the charging and discharging process of the battery 100, a positive electrode active material and a negative electrode active material react with the electrolyte, and the tabs are connected to the electrode terminal to form a current loop.

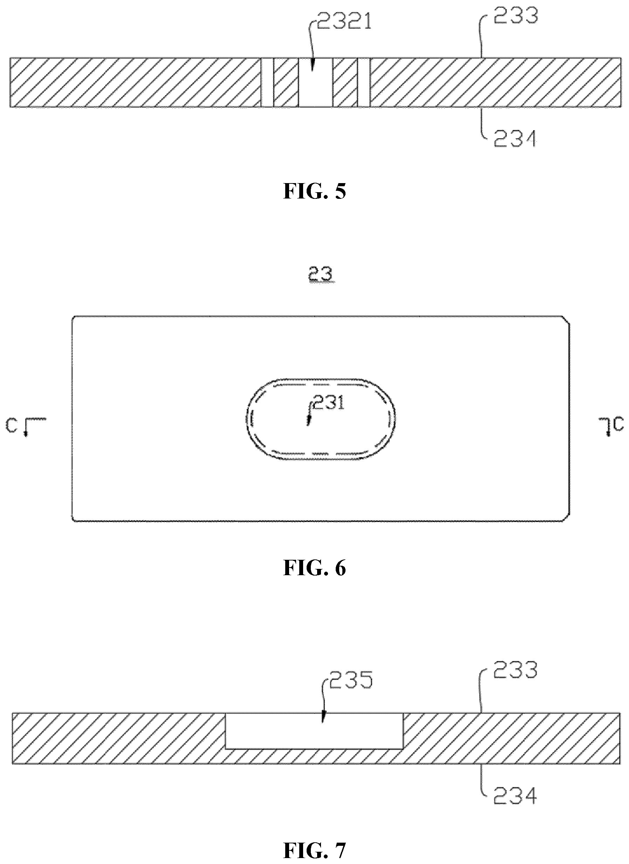

With reference to FIG. 3, FIG. 4 and FIG. 5, FIG. 4 is a front-view schematic diagram of an insulating member 23 provided by some embodiments of the present application. FIG. 5 is a sectional diagram of a B-B position in FIG. 4. An embodiment of the present application provides a battery cell 20, and the battery cell 20 includes an electrode assembly 21, a case 22 and an insulating member 23. The case 22 is used for accommodating the electrode assembly 21. The case 22 has a wall portion 2221 arranged opposite the electrode assembly 21 in a first direction, and the wall portion 2221 is provided with a first pressure-relief area 2222. In the first direction, the insulating member 23 is at least partially arranged between the electrode assembly 21 and the wall portion 2221 to insulate and isolate the electrode assembly 21 from the wall portion 2221. The insulating member 23 is provided with a second pressure-relief area 231 at the position corresponding to the first pressure-relief area 2222, and the first pressure-relief area 2222 and the second pressure-relief area 231 are configured to be open when the battery cell 20 releases pressure.

It is to be noted that the dotted line in FIG. 4 represents a projection range of the first pressure-relief area 2222 on the insulating member 23 in the first direction.

The first pressure-relief area 2222 can be open when the internal pressure of the battery cell 20 reaches the explosion-initiating pressure, thus releasing the pressure inside the battery cell 20, and reducing the risk of explosion and fire of the battery cell 20.

That "the wall portion 2221 is provided with a first pressure-relief area 2222" includes that the first pressure-relief area 2222 is directly arranged on the wall portion 2221, and also includes that the first pressure-relief area 2222 is indirectly arranged on the wall portion 2221. For example, the wall portion 2221 is provided with an intermediate component, and the first pressure-relief area 2222 is located on the intermediate component, i.e. the first pressure-relief area 2222 is indirectly arranged on the wall portion 2221.

The first direction is a direction to which the wall portion 2221 provided with the first pressure-relief area 2222 on the case 22 points to the electrode assembly 21 along an axis perpendicular to the wall portion 2221. With reference to FIG. 4, the first direction can be a direction A shown in the figure.

The case 22 is provided with a plurality of walls, such as a bottom wall, a side wall, and a top wall. The wall portion 2221 refers to a wall provided with the first pressure-relief area 2222. For example, if the first pressure-relief area 2222 is arranged on the bottom wall, the wall portion 2221 refers to the bottom wall of the case 22. For another example, if the first pressure-relief area 2222 is arranged on the top wall, the wall portion 2221 refers to the top wall of the case 22. For yet another example, if the first pressure-relief area 2222 is arranged on the side wall, the wall portion 2221 refers to the side wall of the case 22. For yet another example, if the first pressure-relief area 2222 is arranged on the end cover 221, the wall portion 2221 may also refer to the end cover 221.

The insulating member 23 is a component which is made of an insulating material and has insulating properties. The insulating material includes but is not limited to plastic or rubber and the like. The insulating member 23 is used for insulating the electrode assembly 21 from the wall portion 2221, so that the electrode assembly 21 is prevented from being electrically connected to the wall portion 2221 to cause short circuit of the battery cell 20. The insulating member 23 can be completely located between the electrode assembly 21 and the wall portion 2221, or partially located between the electrode assembly 21 and the wall portion 2221.

When the battery cell 20 is in normal use, the second pressure-relief area 231 can insulate the electrode assembly 21 from the first pressure-relief area 2222, so that electrolyte is prevented from scouring the first pressure-relief area 2222. The second pressure-relief area 231 can also be open when the battery cell 20 releases pressure, thus gas in the battery cell 20 can pass through the insulating member 23 to be discharged via the first pressure-relief area 2222, and then the pressure is released.

The insulating member 23 is arranged between the electrode assembly 21 of the battery cell 20 and the wall portion 2221 provided with the first pressure-relief area 2222, and the insulating member 23 is provided with the second pressure-relief area 231 corresponding to the first pressure-relief area 2222. When the battery cell 20 is in normal use, the second pressure-relief area 231 separates the electrode assembly 21 from the first pressure-relief area 2222, and even if the battery cell 20 is vibrated, electrolyte in the case 22 is not prone to scouring the first pressure-relief area 2222 and thereby influencing the explosion-initiating pressure of the first pressure-relief area 2222. When the battery cell 20 releases pressure, the second pressure-relief area 231 is open to allow gas to pass through the insulating member 23 to release pressure via the first pressure-relief area 2222, which has high safety.

With reference to FIG. 4 and FIG. 5, in some embodiments, the insulating member 23 is provided with a score 232, and the score 232 is formed along the edge of the second pressure-relief area 231.

The score 232 can be formed in a surface of the insulating member 23 facing the wall portion 2221, and can also be formed in the surface of the insulating member 23 deviating from the wall portion 2221. Taking the insulating member 23 as a rectangular flat plate structure as an example, the insulating member 23 is provided with a first surface 233 and a second surface 234 which are opposite in the first direction, the first surface 233 faces the wall portion 2221, the second surface 234 deviates from the wall portion 2221, and the score 232 can be formed in the first surface 233 of the insulating member 23, or the second surface 234 of the insulating member 23.

The score 232 can be a groove which is sunken from the surface of the insulating member 23 in the first direction, and the second pressure-relief area 231 is a portion defined by an inner side surface of the groove. Optionally, the score 232 can partially penetrate through the first surface 233 and the second surface 234 of the insulating member 23. Taking the inner side surface of the score 232 as a rectangle for example, the second pressure-relief area 231 is a rectangular portion defined from the insulating member 23 by inner side surface of the score 232. The score 232 can also be a linear groove extending along a bending track, for example, if the bending track is a U-shaped track, the second pressure-relief area 231 is a U-shaped portion defined from the insulating member 23 by the bending track. For another example, if the bending track is a rectangular track, the second pressure-relief area 231 is a rectangular portion defined from the insulating member 23 by the bending track. If the score 232 is the linear groove extending along the bending track, and when the internal pressure of the battery cell 20 reaches the explosion-initiating pressure, the second pressure-relief area 231 can be open with the score 232 as a boundary to release the pressure inside the battery cell 20.

As the score 232 is formed in the insulating member 23 to form a weak position, the second pressure-relief area 231 can be conveniently open from the weak position when the battery cell 20 releases pressure. As the score 232 is arranged along the edge of the second pressure-relief area 231, the second pressure-relief area 231 will be open along the edge when the battery cell 20 releases pressure, so as to provide a large opening for gas to pass through.

In some embodiments, the score 232 is arranged around the outer side of a projection of the first pressure-relief area 2222 on the insulating member 23 in the first direction.

That "the score 232 is arranged around the outer side of a projection of the first pressure-relief area 2222 on the insulating member 23 in the first direction" also be understood as that the score 232 is arranged around the outer side the first pressure-relief area 2222. Or, in the first direction, the first pressure-relief area 2222 is positioned in a range defined by the projection of the score 232 on the wall portion 2221.

As the score 232 is arranged along the edge of the second pressure-relief area 231 and is arranged around the outer side of the projection of the first pressure-relief area 2222 on the insulating member 23 in the first direction, the range of the second pressure-relief area 231 is larger than that of the first pressure-relief area 2222 That is, the projection of the second pressure-relief area 231 on the wall portion 2221 covers the first pressure-relief area 2222 in the first direction. Therefore, when the battery cell 20 releases pressure, the area of an opening formed by the opened second pressure-relief area 231 is larger than that of the first pressure-relief area 2222, so that smooth pressure releasing is ensured.

In other embodiments, in the first direction, the projection of the score 232 on the wall portion 2221 is located in the first pressure-relief area 2222. At the moment, the area of the opening formed by the opened second pressure-relief area 231 is smaller than or equal to that of the first pressure-relief area 2222.

In some embodiments, a first pressure-relief groove is formed in the wall portion 2221 and is arranged along the edge of the first pressure-relief area 2222. The score 232 is arranged around the outer side of the projection of the first pressure-relief groove on the insulating member 23 in the first direction.

The first pressure-relief groove can be formed in the surface of the wall portion 2221 facing the insulating member 23, and can also be formed in the surface of the wall portion 2221 deviating from the insulating member 23. Taking the wall portion 2221 as a rectangular flat plate structure as an example, the wall portion 2221 is provided with a third surface and a fourth surface which are opposite in the first direction, the third surface faces the insulating member 23, the fourth surface deviates from the insulating member 23, and the first pressure-relief groove can be formed in the third surface of the wall portion 2221, and can also be formed in the fourth surface of the wall portion 2221.

The first pressure-relief groove can be a groove which is sunken from the surface of the wall portion 2221 in the first direction, and the first pressure-relief area 2222 is a portion defined by the inner side surface of the groove. Taking the inner side surface of the first pressure-relief groove as a rectangle for example, the first pressure-relief area 2222 is a rectangular portion defined from the wall portion 2221 by the inner side surface of the first pressure-relief groove. The first pressure-relief groove can also be a linear groove extending along a bending track, for example, if the bending track is a U-shaped track, the first pressure-relief area 2222 is a U-shaped portion defined from the wall portion 2221 by the bending track. For another example, if the bending track is a rectangular track, the first pressure-relief area 2222 is a rectangular portion defined from the wall portion 2221 by the bending track. If the first pressure-relief groove is the linear groove extending along the bending track, when the internal pressure of the battery cell 20 reaches the explosion-initiating pressure, the first pressure-relief area 2222 can be open with the first pressure-relief groove as a boundary, so as to release the pressure inside the battery cell 20.

That "score 232 is arranged around the outer side of the projection of the first pressure-relief groove on the insulating member 23 in the first direction" can also be understood as that the score 232 is arranged around the outer side of the first pressure-relief groove. Or, in the first direction, the first pressure-relief groove is located in a range defined by the projection of the score 232 on the wall portion 2221.

As the first pressure-relief groove is formed in the wall portion 2221 to form a weak position, the first pressure-relief area 2222 can be conveniently open from the weak position when the battery cell 20 releases pressure. As the first pressure-relief groove is formed along the edge of the first pressure-relief area 2222, when the battery cell 20 releases pressure, the first pressure-relief area 2222 can be open along the edge, so as to provide a large opening for gas to pass through.

In other embodiments, the battery cell 20 includes a pressure-relief member, a pressure-relief hole is formed in the wall portion 2221, and the pressure-relief member covers the pressure-relief hole. A second pressure-relief groove is formed in the pressure-relief member, and the second pressure-relief groove is formed along the edge of the first pressure-relief area 2222. The score 232 is arranged around the outer side of the projection of the second pressure-relief groove on the insulating member 23 in the first direction.

The second pressure-relief groove can be formed in the surface of the pressure-relief member facing the insulating member 23, or the surface of the pressure-relief member deviating from the insulating member 23. Taking the pressure-relief member as a rectangular flat plate structure as an example, the pressure-relief member is provided with a fifth surface and a sixth surface which are opposite in the first direction, the fifth surface faces the insulating member 23, the sixth surface deviates from the insulating member 23, and the second pressure-relief groove can be formed in the fifth surface of the pressure-relief member and can also be formed in the sixth surface of the pressure-relief member.

The second pressure-relief groove can be a groove which is sunken from the surface of the pressure-relief member in the first direction, and the first pressure-relief area 2222 is a portion defined by the inner side surface of the groove. Taking the inner side surface of the first pressure-relief groove as a rectangle for example, the first pressure-relief area 2222 is a rectangular portion defined from the pressure-release member by the inner side surface of the second pressure-relief groove. The second pressure-relief groove can also be a linear groove extending along a bending track, for example, if the bending track is a U-shaped track, the first pressure-relief area 2222 is a U-shaped portion defined from the pressure-relief member by the bending track. For another example, if the bending track is a rectangular track, the first pressure-relief area 2222 is a rectangular portion defined from the pressure-relief member by the bending track. If the second pressure-relief groove is the linear groove extending along the bending track, and when the internal pressure of the battery cell 20 reaches the explosion-initiating pressure, the first pressure-relief area 2222 can be open with the second pressure-relief groove as a boundary, so as to release the pressure inside the battery cell 20.

That "the score 232 is arranged around the outer side of the projection of the second pressure-relief groove on the insulating member 23 in the first direction" can also be understood as that the score 232 is arranged around the outer side of the second pressure-relief groove. Or, in the first direction, the second pressure-relief groove is located in the range defined by the projection of the score 232 on the wall portion 2221.

As the second pressure-relief groove is formed in the second pressure-relief member to form a weak position, the first pressure-relief area 2222 can be conveniently open from the weak position when the battery cell 20 releases pressure. As the second pressure-relief groove is formed along the edge of the first pressure-relief area 2222, when the battery cell 20 releases pressure, the first pressure-relief area 2222 can be open along the edge, so as to provide a large opening for gas to pass through.

In some embodiments, the score 232 is arranged around the outer side of the projection of the pressure-relief hole on the insulating member 23 in the first direction.

That "the score 232 is arranged around the outer side of the projection of the pressure-relief hole on the insulating member 23 in the first direction" can also be understood that the score 232 is arranged around the outer side of the pressure-relief hole. Or, in the first direction, the pressure-relief hole is located in the range defined by the projection of the score 232 on the wall portion 2221.

As the score 232 is arranged around the outer side of the projection of the pressure-relief hole on the insulating member 23 in the first direction, if the score 232 penetrates through the insulating member 23, when the battery cell 20 is in normal use, the electrolyte cannot directly flow to the pressure-relief member after passing through the score 232, but firstly collides with the wall portion 2221 and changes the flowing direction, and then flows to the pressure-relief member after impact force is reduced, so that the pressure-relief member is not prone to being scoured by the electrolyte. In addition, when the battery cell 20 releases pressure, the opening area of the second pressure-relief area 231 is larger than the area of the pressure-relief hole, and thus smooth pressure releasing is ensured.

With reference to FIG. 4 and FIG. 5, in some embodiments, the score 232 includes a plurality of sections 2321 which are arranged at intervals in the circumferential direction of the second pressure-relief area 231.

The score sections 2321 are a part of the score 232. The plurality of score sections 2321 jointly form the score 232. That "a plurality of sections 2321 are arranged at intervals in the circumferential direction of the second pressure-relief area 231" may also refer to that the plurality of score sections 2321 are arranged at intervals in the circumferential direction of the first pressure-relief area 2222.

By arranging the plurality of score sections 2321, when the battery cell 20 releases pressure, the second pressure-relief area 231 can be open from the plurality of score sections 2321 to allow gas to pass through the insulating member 23 to release pressure via the first pressure-relief area 2222. The plurality of score sections 2321 are arranged at intervals in the circumferential direction of the second pressure-relief area 231, instead of forming the whole circle of score 232 in the circumferential direction of the second pressure-relief area 231, so that the strength of the second pressure-relief area 231 is relatively high, and even if the battery cell 20 is subjected to large vibration, the second pressure-relief area 231 cannot be opened by mistake.

With reference to FIG. 4 and FIG. 5, in some embodiments, in the first direction, the score sections 2321 penetrate through two opposite surfaces of the insulating member 23.

In the first direction, the two opposite surfaces of the insulating member 23 are the first surface 233 and the second surface 234 respectively. The score sections 2321 penetrate through the first surface 233 and the second surface 234. At the moment, the score sections 2321 are through holes formed in the insulating member 23.

As the score sections 2321 penetrate through the two surfaces of the insulating member 23 in the first direction, the second pressure-relief area 231 is easier to be open when the battery cell 20 releases pressure. In addition, although the score sections 2321 penetrate through the two surfaces of the insulating member 23 in the first direction, the score 232 is arranged around the outer side of the first pressure-relief area 2222, so the electrolyte passing through the insulating member 23 cannot directly scour the first pressure-relief area 2222, but passes through the insulating member 23 and changes the direction and then flows to the first pressure-relief area 2222; and therefore, the impact force of the electrolyte is not strong, and the explosion-initiating pressure of the first pressure-relief area 2222 is not easily influenced.

With reference to FIG. 4 and FIG. 5, in some embodiments, the width of the score sections 2321 is D1, which meets D1≤2mm.

The score sections 2321 extend in the circumferential direction of the second pressure-relief area 231, and the extension direction of the score sections 2321 is also the length direction of the score sections 2321. D1 represents the width of the score sections 2321. The score sections 2321 can be the same or different in width, but are all smaller than or equal to 2 mm in width. In the embodiment, the score sections 2321 have the same width. The width of the score sections 2321 can be: D1=2mm, 1.8mm, 1.5mm, 1.2mm, 1mm, 0.8mm, 0.5mm, etc.

The width of the score sections 2321 is smaller than 2 mm, the width of the remaining portion between every two adjacent score sections 2321 is actually limited, and the smaller the width of the portion is, the easier the second pressure-relief area 231 is opened when the battery cell 20 releases pressure. If D1>2mm, the width of the remaining portion between every two adjacent score sections 2321 is also larger than 2 mm, consequently, the width of the remaining portion is larger, the second pressure-relief area 231 cannot be open in time when the battery cell 20 releases pressure, and as a result, the battery cell 20 cannot release pressure in time.

With reference to FIG. 4 and FIG. 5, in some embodiments, in the circumferential direction of the second pressure-relief area 231, the distance between every two adjacent score sections 2321 is D2, which meets: D2≤10mm.

In the circumferential direction of the second pressure-relief area 231, the plurality of score sections 2321 can be arranged at equal intervals or at unequal intervals, but the distance between every two adjacent score sections 2321 is smaller than or equal to 10 mm. In the embodiment, in the circumferential direction of the second pressure-relief area 231, the plurality of score sections 2321 are arranged at equal intervals. In the circumferential direction of the second pressure-relief area 231, the distance between every two adjacent score sections 2321 can be: D2=10mm, 9.5mm, 9mm, 8.5mm, 8mm, 7.5mm, 6mm, 5mm, 4mm, 3mm, etc.

When there is an arc-shaped score section 2321 in every two adjacent score sections 2321, in the circumferential direction of the second pressure-relief area 231, the distance between every two adjacent score sections 2321 refers to the shortest linear distance between an end face of the first score section 2321 close to the second score section 2321 and an end face of the second score section 2321 close to the first score section 2321.

The distance between every two adjacent score sections 2321 is also the length of the remaining portion between the two adjacent score sections 2321, and the smaller the length of the portion is, the easier the second pressure-relief area 231 is opened when the battery cell 20 releases pressure. If D2>10mm, the length of the remaining portion between the two adjacent score sections 2321 is also larger than 10 mm, consequently, the length of the part is larger, the second pressure-relief area 231 cannot be open in time when the battery cell 20 releases pressure, and as a result, the battery cell 20 cannot release pressure in time.

With reference to FIG. 4 and FIG. 5, in some embodiments, in a direction perpendicular to the first direction, the spacing between the score 232 and the first pressure-relief area 2222 is D3, which meets: D3≤3mm.

The spacing between the score 232 and the first pressure-relief area 2222 may be different at different positions, and the spacing between the score 232 and the first pressure-relief area 2222 may also be the same at different positions. However, in the direction perpendicular to the first direction, the spacing between the score 232 and the first pressure-relief area 2222 is smaller than or equal to 3 mm. In the direction perpendicular to the first direction, the value of the spacing between the score 232 and the first pressure-relief area 2222 can be: D3=3mm, 2.8mm, 2.5mm, 2.2mm, 2mm, 1.8mm, 1.5mm, 1mm, etc.

By limiting the spacing between the score 232 and the first pressure-relief area 2222 in the direction perpendicular to the first direction, an area relationship between the second pressure-relief area 231 and the first pressure-relief area 2222 is actually limited. The area of the second pressure-relief area 231 is larger than that of the first pressure-relief area 2222, but the area of the second pressure-relief area 231 cannot be too large, otherwise, when the second pressure-relief area 231 is open, the second pressure-relief area 231 is insulated from an insulating member 23, the insulated portion may fall to the first pressure-relief area 2222, and therefore the first pressure-relief area 2222 is blocked, and pressure release of the first pressure-relief area 2222 is affected.

With reference to FIG. 6 and FIG. 7, FIG. 6 is a front-view schematic diagram of an insulating member 23 provided by some other embodiments of the present application. FIG. 7 is a sectional diagram of a C-C position in FIG. 6. In some other embodiments, the insulating member 23 is provided with a groove 235, and an area defined by a bottom wall and a side wall of the groove 235 is the second pressure-relief area 231.

When the battery cell 20 is in normal use, the bottom wall of the groove 235 separates the electrode assembly 21 from the first pressure-relief area 2222, even if the battery cell 20 is vibrated, the electrolyte in the case 22 is not prone to scouring the first pressure-relief area 2222 and thereby influencing the explosion-initiating pressure of the first pressure-relief area 2222. When the battery cell 20 releases pressure, the bottom wall of the groove 235 is open to allow gas to pass through the insulating member 23 to release pressure via the first pressure-relief area 2222, which has high safety.

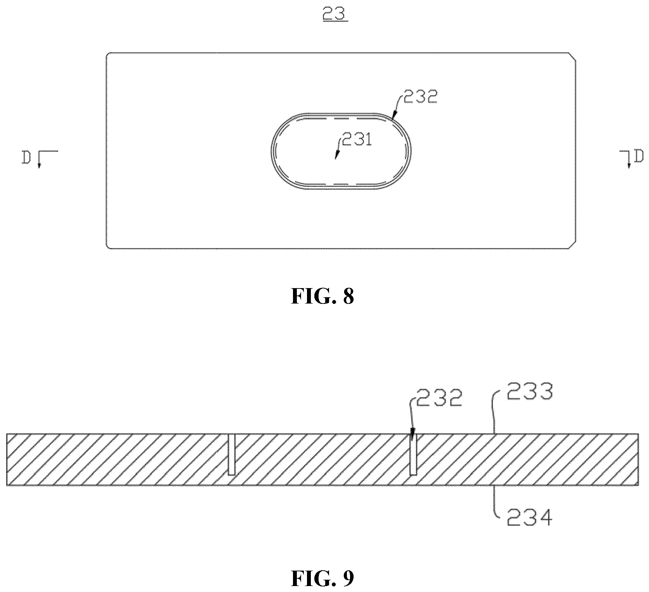

With reference to FIG. 8 and FIG. 9, FIG. 8 is a front-view schematic diagram of an insulating member 23 provided by some other embodiments of the present application. FIG. 9 is a sectional diagram of a D-D position in FIG. 8. In some other embodiments, the score 232 is of a closed structure extending along a closed track.

The closed track is a track with the head and the tail connected, such as a rectangular track and an oval track. The shape of the score 232 is the same as that of the closed track.

The score 232 is a whole circle of score 232 arranged along the edge of the second pressure-relief area 231, and therefore when the battery cell 20 releases pressure, the second pressure-relief area 231 is easy to open.

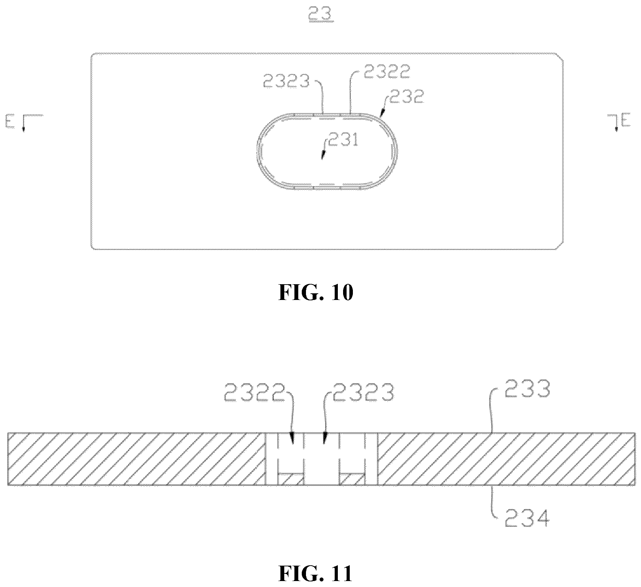

With reference to FIG. 10 and FIG. 11, FIG. 10 is a sectional diagram of an insulating member 23 provided by some yet other embodiments of the present application. FIG. 11 is a sectional diagram of an E-E position in FIG. 10. In some yet other embodiments, the score 232 includes a plurality of groove sections 2322 and a plurality of hole sections 2323. In the circumferential direction of the second pressure-relief area 231, the groove sections 2322 and the hole sections 2323 are alternately arranged. In the first direction, the insulating member 23 is provided with the first surface 233 and the second surface 234 which are opposite. The groove sections 2322 are sunken from the first surface 233 to the second surface 234, and the hole sections 2323 penetrate through the first surface 233 and the second surface 234.

It is to be noted that the dotted line in FIG. 11 is only used for conveniently showing the positions of the groove sections 2322 and does not represent a solid structure.

In the circumferential direction of the second pressure-relief area 231, one hole section 2323 is arranged between every two adjacent groove sections 2322, and one groove section 2322 is arranged between every two adjacent hole sections 2323. The groove sections 2322 are of a groove-shaped structure penetrating through the first surface 233 of the insulating member 23 and not penetrating through the second surface 234 of the insulating member 23. The hole sections 2323 are of a hole-shaped structure penetrating through the first surface 233 and the second surface 234 of the insulating member 23.

The groove sections 2322 and the hole sections 2323 are different in depth. The hole sections 2323 penetrate through the first surface 233 and the second surface 234, so the depth is large. The groove sections 2322 are sunken from the first surface 233 to the second surface 234, so the depth is small. The groove sections 2322 and the hole sections 2323 are arranged at intervals in the circumferential direction of the second pressure-relief area 231, so that the second pressure-relief area 231 is easy to open when the battery cell 20 releases pressure.

In some embodiments, in the first direction, the insulating member 23 is provided with the first wall portion 2221 facing the first surface 233, and the score 232 is arranged in the first surface 233.

The first surface 233 is a surface of the insulating member 23 facing the wall portion 2221 in the first direction, namely the surface of the insulating member 23 deviating from the electrode assembly 21 in the first direction. The score 232 is formed in the first surface 233 and is sunken towards the second surface 234.

The score 232 is formed in the surface of the insulating member 23 facing the wall portion 2221, so the electrolyte is not easily gathered in the score 232, and sufficient electrolyte in the battery cell 20 is guaranteed.

In some embodiments, the insulating member 23 is of a flat plate structure.

The insulating member 23 is set to be of the flat plate structure, so on one hand, the volume occupied in the battery cell 20 is relatively small. On the other hand, the flat plate structure can have a good supporting effect on the electrode assembly 21 and is not easy to damage the electrode assembly 21.

An embodiment of the present application provides a battery 100. The battery 100 includes a box 10 and the battery cell 20, and the battery cell 20 is accommodated in the box 10.

An embodiment of the present application provides an electrical device, the electrical device includes the battery 100, and the battery 100 is configured to providing electric energy for the electrical device.

According to some embodiments of the present application, with reference to FIG. 4 and FIG. 5.

An embodiment of the present application provides a battery cell 20, and the battery cell 20 includes an electrode assembly 21, a case 22 and an insulating member 23. The case 22 is used for accommodating the electrode assembly 21. The case 22 has the wall portion 2221 arranged opposite the electrode assembly 21 in the first direction, and the wall portion 2221 is provided with the first pressure-relief area 2222. In the first direction, the insulating member 23 is at least partially arranged between the electrode assembly 21 and the wall portion 2221 to insulate and isolate the electrode assembly 21 from the wall portion 2221. The insulating member 23 is provided with a second pressure-relief area 231 at the position corresponding to the first pressure-relief area 2222, and the first pressure-relief area 2222 and the second pressure-relief area 231 are configured to be open when the battery cell 20 releases pressure.

The insulating member 23 is provided with the score 232, and the score 232 is arranged around the outer side of the first pressure-relief area 2222. The score 232 includes the plurality of score sections 2321, and the plurality of score sections 2321 are arranged at intervals in the circumferential direction of the second pressure-relief area 231. In the first direction, the score sections 2321 penetrate through the two opposite surfaces of the insulating member 23.

The insulating member 23 is arranged between the electrode assembly 21 of the battery cell 20 and the wall portion 2221 provided with the first pressure-relief area 2222, and the insulating member 23 is provided with the second pressure-relief area 231 corresponding to the first pressure-relief area 2222. When the battery cell 20 is in normal use, the second pressure-relief area 231 separates the electrode assembly 21 from the first pressure-relief area 2222, and even if the battery cell 20 is vibrated, electrolyte in the case 22 is not prone to scouring the first pressure-relief area 2222 and thereby influencing the explosion-initiating pressure of the first pressure-relief area 2222. When the battery cell 20 releases pressure, the second pressure-relief area 231 is open to allow gas to pass through the insulating member 23 to release pressure via the first pressure-relief area 2222, which has high safety.

As the score 232 is formed in the insulating member 23 to form the weak position, the second pressure-relief area 231 can be conveniently open from the weak position when the battery cell 20 releases pressure. As the score 232 is arranged along the edge of the second pressure-relief area 231 and is arranged around the outer side of the first pressure-relief area 2222, the range of the second pressure-relief area 231 is larger than that of the first pressure-relief area 2222 That is, the projection of the second pressure-relief area 231 on the wall portion 2221 covers the first pressure-relief area 2222 in the first direction. Therefore, when the battery cell 20 releases pressure, the area of an opening formed by the opened second pressure-relief area 231 is larger than that of the first pressure-relief area 2222, so that smooth pressure releasing is ensured. By arranging the plurality of score sections 2321, when the battery cell 20 releases pressure, the second pressure-relief area 231 can be open from the plurality of score sections 2321 to allow gas to pass through the insulating member 23 to release pressure via the first pressure-relief area 2222. The plurality of score sections 2321 are arranged at intervals in the circumferential direction of the second pressure-relief area 231, instead of forming the whole circle of score 232 in the circumferential direction of the second pressure-relief area 231, so that the strength of the second pressure-relief area 231 is relatively high, and even if the battery cell 20 is subjected to large vibration, the second pressure-relief area 231 cannot be opened by mistake. As the score sections 2321 penetrate through the two surfaces of the insulating member 23 in the first direction, the second pressure-relief area 231 is easier to be open when the battery cell 20 releases pressure. In addition, although the score sections 2321 penetrate through the two surfaces of the insulating member 23 in the first direction, the score 232 is arranged around the outer side of the first pressure-relief area 2222, so the electrolyte passing through the insulating member 23 cannot directly scour the first pressure-relief area 2222, but passes through the insulating member 23 and changes the direction and then flows to the first pressure-relief area 2222; and therefore, the impact force of the electrolyte is not strong, and the explosion-initiating pressure of the first pressure-relief area 2222 is not easily influenced.

The foregoing is only a preferred embodiment of the present application and is not intended to limit the present application, which may be subject to various changes and variations for those skilled in the art. Any modifications, equivalent substitutions, improvements, etc. made within the spirit and principles of the present application shall fall into the scope of protection of the present application.

## Claims

1. A battery cell, comprising:
an electrode assembly;
a case, which is used for accommodating the electrode assembly and has a wall portion arranged opposite the electrode assembly in a first direction, the wall portion being provided with a first pressure-relief area; and
an insulating member, which is at least partially arranged between the electrode assembly and the wall portion in the first direction to insulate and isolate the electrode assembly from the wall portion,
wherein the insulating member is provided with a second pressure-relief area at a position corresponding to the first pressure-relief area, and the first pressure-relief area and the second pressure-relief area are configured to open when the battery cell releases pressure.

2. The battery cell according to claim 1, wherein the insulating member is provided with a score, and the score is arranged along the edge of the second pressure-relief area.

3. The battery cell according to claim 2, wherein the score is arranged around the outer side of the projection of the first pressure-relief area on the insulating member in the first direction.

4. The battery cell according to claim 3, wherein a first pressure-relief groove is formed in the wall portion, the first pressure-relief groove is arranged along the edge of the first pressure-relief area, and the score is arranged around the outer side of the projection of the first pressure-relief groove on the insulating member in the first direction.

5. The battery cell according to claim 3, wherein the battery cell comprises a pressure-relief member, and a pressure-relief hole is formed in the wall portion; the pressure-relief member covers the pressure-relief hole; a second pressure-relief groove is formed in the pressure-relief member, and the second pressure-relief groove is formed along the edge of the first pressure-relief area; and the score is arranged around the outer side of the projection of the second pressure-relief groove on the insulating member in the first direction.

6. The battery cell according to claim 5, wherein the score is arranged around the outer side of the projection of the pressure-relief hole on the insulating member in the first direction.

7. The battery cell according to any one of claims 3 to 6, wherein the score comprises a plurality of score sections which are arranged at intervals in the circumferential direction of the second pressure-relief area.

8. The battery cell according to claim 7, wherein the score sections penetrate through two opposite surfaces of the insulating member in the first direction.

9. The battery cell according to claim 8, wherein the width of the score sections is D1, which meets: D1≤2mm.

10. The battery cell according to any one of claims 7 to 9, wherein the distance between two adjacent score sections in the circumferential direction of the second pressure-relief area is D2, which meets: D2≤10mm.

11. The battery cell according to any one of claims 3 to 10, wherein in a direction perpendicular to the first direction, the spacing between the score and the first pressure-relief area is D3, which meets: D3≤3mm.

12. The battery cell according to claim 3, wherein the score is of a closed structure extending along a closed track.

13. The battery cell according to claim 12, wherein the score comprises a plurality of groove sections and a plurality of hole sections, and the groove sections and the hole sections are alternately arranged in the circumferential direction of the second pressure-relief area; and
in the first direction, the insulating member is provided with a first surface and a second surface that are opposite, the groove sections are sunken from the first surface to the second surface, and the hole sections penetrate through the first surface and the second surface.

14. The battery cell according to any one of claims 2 to 13, wherein in the first direction, the insulating member is provided with a first surface facing the wall portion, and the score is formed in the first surface.

15. The battery cell according to any one of claims 1 to 14, wherein the insulating member is of a flat plate structure.

16. A battery, comprising:
a box; and
the battery cell according to any one of claims 1 to 15, wherein the battery cell is accommodated in the box.

17. An electrical device, comprising the battery according to claim 16, wherein the battery is configured to provide electric energy for the electrical device.
